# EUROPEAN PATENT APPLICATION

(11) **EP 4 768 524 A1**
(43) Date of publication of application: **01.07.2026**
(21) Application number: 24383478.5
(22) Date of filing: 30.12.2024
(51) Int. Cl.: C08J 3/22, C08K 3/013, C08K 3/26

(54) **MASTERBATCH PLASTIC RESIN-FREE COMPOSITION AND METHOD FOR PREPARING SAID MASTERBATCH PLASTIC RESIN-FREE COMPOSITION**

(71) Applicant: Granulados Técnicos Sostenibles, S.L., 28007 Madrid (ES)
(72) Inventor: FERNÁNDEZ LÓPEZ, José Manuel, 46529 Canet de Berenguer (ES)
(74) Representative: Elzaburu S.L.P.

(57) **Abstract**

The present invention relates to a masterbatch plastic resin-free composition comprising from 75 wt. % to 90 wt. % of mineral filler, pigment, fibre or any combination thereof, from 10 wt. % to 25 wt. % of binder additives, a method for preparing said masterbatch plastic resin-free composition, a plastic article comprising said masterbatch composition, a method for preparing said plastic article and the use of the masterbatch plastic resin-free composition.

## Description

### FIELD OF THE INVENTION

The present invention relates to a masterbatch plastic resin-free composition comprising up to 90 wt. % of mineral filler, pigment, fibre or any combination thereof, binding additives, and a method for preparing said masterbatch plastic resin-free composition, a plastic article comprising said masterbatch composition, a method for preparing said plastic article and the use of the masterbatch plastic resin-free composition.

### BACKGROUND OF THE INVENTION

Plastics are cheap and durable materials that can be used to make a wide range of products for a variety of applications. As a result, the production of plastics has increased dramatically in recent decades. Much of this plastic is used for single-use applications or for short-lived products (such as bags, packaging including trays, containers, bottles, agricultural film, etc.) that are discarded within a year of manufacture. Due to the durability of the polymers involved and their high resistance to biodegradation (due to high molecular weight, hydrophobicity and crystallinity), significant amounts of plastics accumulate in landfills and natural habitats, causing increasing environmental problems around the world. In response to these problems, the European Union has legislated to achieve a series of targets for the recycling and recyclability of plastic items put into circulation: Member States must strive to recycle 50 % of plastic waste by 2025 and 55 % by 2035. The gradual increase in the use of recycled plastic is leading to a search for new solutions that allow some of this recycled plastic to be incorporated. In most of the current applications, as well as in the new ones that are being developed, the incorporation of minerals, optionally pigments and/or fibres, is essential to give the plastic properties that it lacks by default: hardness, toughness, resistance to deformation, etc. Among these new applications we can name the building of houses with recycled plastic.

The incorporation of minerals, optionally pigments and/or fibres, is done through a so-called masterbatch. A masterbatch is a concentrated mixture of pigments and/or additives blended and extruded in a carrier matrix, such as resin or wax, which is used to add these blended additives to a final plastic product. The additives may be used for colouring (a "colour masterbatch") or for imparting other properties (an "additive masterbatch").

Masterbatch is typically produced by mixing the desired materials into a carrier resin, such as polyethylene or polypropylene, which is then pelletized for use in plastics processing. The carrier resin acts as a binder or carrier for the added materials, and the concentration of added materials can range from a few percent to 80 % or more. There are several types of masterbatch available, including colour masterbatch, additive masterbatch, and combination masterbatch. Colour masterbatch is used to add colour to plastics, while additive masterbatch is used to modify the properties of plastics, such as improving UV resistance, flame retardancy, or impact resistance. Combination masterbatch combines both colour and additive functions. Masterbatch is commonly used in a wide range of plastic products, including packaging materials, automotive parts, household appliances, and construction materials. Its use can help to improve the appearance and performance of these products, and it can also reduce manufacturing costs by simplifying colouring and modification processes.

Document CN106221290A discloses an inorganic material surface treatment technology and a method for preparing carrier-free masterbatch.

Document CN101792536A discloses a preparation method of carrier-free talcum powder master batch.

Document CN116144048A discloses a carrier-free plastic filling master batch.

Document CN116284881A discloses a carrier-free colour master batch preparation method and a carrier-free colour master batch preparation system.

Therefore, there is still a need to produce plastic articles with improved recycled plastic utilization in the plastic article, leading to a reduction in CO₂ emissions without compromising the mechanical, physical and/or chemical properties of the resulting plastic articles.

### SUMMARY OF THE INVENTION

The present invention relates to a masterbatch plastic resin-free composition comprising up to 90 wt. % of mineral filler, pigment, fibre or any combination thereof, binding additives, and a method for preparing said masterbatch plastic resin-free composition, a plastic article comprising said masterbatch composition, a method for preparing said plastic article and the use of the masterbatch plastic resin-free composition.

In a first aspect, the present invention relates to a masterbatch composition comprising from 75 wt. % to 90 wt. % of mineral filler, pigment, fibre or any combination thereof, and from 10 wt. % to 25 wt. % of binder additives, wherein the masterbatch composition is a plastic resin-free composition, and wherein all the weight percentages (wt. %) are relative to the total weight of the composition.

In a second aspect, the present invention relates to a method for producing a masterbatch according to the first aspect comprising the steps of (a) mixing the mineral filler, pigment, fibre or any combination thereof, with the binder additives at room temperature in a standard high-speed mixer; (b) optionally adding the additional additives to the mixture of step (a); (c) optionally cooling the mixture of step (a) or (b); (d) granulating of the mixture of any one of previous steps (a) or (b) or (c) in a standard flat die pellet mill, wherein the granulating further comprises (i) setting the pellet length from 2.50 to 6.00 mm, preferably from 3.0 mm to 5.5 mm, and more preferably from 4.50 to 5.00 mm; and (ii) shaping the settled pellet in a cylindrical pellet form with a diameter from 2.00 mm to 6.00 mm, preferably from 2.50 mm to 4.00 mm, more preferably from 2.75 mm to 3.50 mm; and producing a masterbatch.

In a third aspect, the present invention relates to a plastic article characterised in that it comprises the masterbatch composition according to the first aspect, and a thermoplastic polymer resin selected from polyolefins, polyethylene (PE), polypropylene (PP), polymethylpentene (PMP), polybutene-I (PB-1), polyisobutylene (PIB), ethylene propylene rubber (EPR), ethylene propylene diene monomer rubber (EPDM), cyclic olefin copolymer (COC) and derivatives or any combination thereof.

In a fourth aspect, the present invention relates to a method for producing a plastic article according to the third aspect, comprising the steps of (a) providing a masterbatch comprising a composition according to the first aspect; and (b) mixing the masterbatch composition of previous step (a) into a thermoplastic polymer resin, and wherein the thermoplastic polymer resin is selected from polyolefin, polyethylene (PE), polypropylene (PP), polymethylpentene (PMP), polybutene-I (PB-1), polyisobutylene (PIB), ethylene propylene rubber (EPR), ethylene propylene diene monomer rubber (EPDM), cyclic olefin copolymer (COC) and derivatives or combinations thereof.

In a fifth aspect, the present invention relates to the use of a masterbatch composition according to the first aspect for producing plastic articles.

### DESCRIPTION OF THE INVENTION

Specific embodiments of the present application will now be described. These embodiments are provided so that this disclosure will be thorough and complete and will fully convey the scope of the subject matter to those skilled in the art. The terminology used herein is for the purpose of describing the embodiments only and should not be construed as limiting the scope of the disclosure as a whole. The inventor has developed a masterbatch composition that comprises high concentrations of mineral filler(s), pigment, fibre or any combination thereof, and binder additives without the use of any plastic resin. In particular, the present invention provides a composition and a method to allow the production of plastic articles with an improved rate of recycled plastic utilisation rate in the plastic article, leading to a reduction in CO₂ emissions and favouring the circular economy. The present invention can be used in standard plastic processing operations (extrusion, moulding, injection, etc.) without affecting the mechanical, physical and/or chemical properties of the resulting plastic articles, but on the contrary improving them by being the main objective of its incorporation.

In summary, the described masterbatch of the present invention comprises a mixture of natural and synthetic materials. The absence of plastic in the composition (formulation) allows its use by the end user to be optimised, particularly with regard to the recycling industry. The absence of a plastic load leads to a reduction in CO₂ emissions. In addition, the product is more concentrated, resulting in a reduction in logistical movements and, consequently, a reduction in CO₂ emissions and energy savings. The plastic also undergoes fewer transformations, which increases its durability. In current processes, if the pellets contain plastic, they have already undergone extrusion to obtain the mineral filler masterbatch, and then they are extruded again by the end customer. The production process of the present invention requires one tenth of the energy required by current processes to obtain a mineral filler masterbatch. Therefore, the composition of the masterbatch and the methods of the invention offer a remarkable advantage for the manufacture of improved plastic articles under industrial conditions.

As used herein, the expression "masterbatch composition" refers to a concentrated mixture of selected ingredients that can be used to incorporate such ingredients into plastic articles or materials to impart the desired properties to them. The raw materials in a masterbatch may be solid or liquid at room temperature. Masterbatch compositions allow the processor to introduce technically and economically selected ingredients during the plastics manufacturing process. Until the present invention, the masterbatch composition are used with a base polymer as the binding element of the ingredients required to produce the final plastic article having a desired number of selected ingredients. The masterbatch composition of the present invention comprises from 75 wt. % to 90 wt. % of mineral filler, pigment, fibre or any combination thereof, and from 10 wt. % to 25 wt. % of binder additives, wherein all the weight percentages (wt. %) are relative to the total weight of the composition, and in no case any plastic resin.

As used herein, the expression "mineral filler", also known as filler and used interchangeably, refers to a substance that is incorporated into a plastic material and/or a plastic article to reduce the cost of the plastic material or, optionally, to improve the physical properties of the plastic material and/or a plastic product (e.g., its hardness, stiffness or strength, texture).

As used herein, the term "pigment" refers to chemical compounds, fillers, that are incorporated into the masterbatch and, later, during their use, when mixed with the base polymer of the plastic article, give it the desired colour. Pigments can be organic substances, inorganic substances of natural origin (plant or animal), or synthetic substances produced specifically by means of chemical reactions. The term "pigment" in the sense of the present invention thus refers to the need of manufacturers of plastic articles to provide substances which give such articles the desired colour. Thus, pigments may be incorporated into the final polymer base by manufacturers of plastic articles for aesthetic purposes in order to impart colour to the final plastic article.

As used herein, the expression "fibre" refers to filiform materials, whether of natural or artificial, organic or inorganic origin, such as fibreglass, carbon fibre, metallic fibres.

As used herein, the expression "binder additive", or binding additive, refers to any material that may be required by the manufacturer of plastic articles, selected from those required to facilitate/improve/increase the productivity of the plastic articles or from those required to impart certain qualities/properties to the final plastic article.

A masterbatch always requires a binding additive element. The distinguishing feature of the present invention is that no plastic resin is used as a binding additive. Therefore, according to the present invention, it is not necessary to melt a plastic resin that acts as a binder of the mineral filler, pigment, fibre or any combination thereof, and the binding additives that it comprises. The composition of the masterbatch and the binding additives used will vary according to the final application and can be perfectly defined by a person skilled in the art of plastics processing, depending on the specific requirements of both the manufacturers of the plastic article and the plastic article itself, taking into account their physical, chemical and aesthetic characteristics.

In a preferred embodiment of the first aspect, the masterbatch composition comprises from 75 wt. % to 90 wt. % of mineral filler, preferably from 85 wt. % to 90 wt. %, more preferably 88 wt %. The mineral filler may have a wt. % of 75 wt. %, 76 wt. %, 77 wt. %, 78 wt. %, 79 wt. %, 80 wt. %, 81 wt. %, 82 wt. %, 83 wt. %, 84 wt. %, 85 wt. %, 86 wt. %, 87 wt. %, 88 wt. %, 89 wt. % or 90 wt. %. As used herein, and throughout the invention, the terms "weight percent," and "wt. %", which may be used interchangeably, indicate the weight percent of a given ingredient based on the total weight of the composition, unless otherwise specified. That is, unless otherwise stated, all weight percent values are based on the total weight of the composition.

In a preferred embodiment of the first aspect, the mineral filler of the masterbatch composition is selected from inorganic mineral filler, organic mineral filler or any combination thereof. In the present invention, mineral fillers can be inactive (i.e. inert) or active material and can form chemical bonds with the components of the plastic material or product. Mineral fillers may be synthetic, natural or modified. Mineral fillers can contain mineral and/or organic substances. Examples of inorganic mineral fillers used in the plastics industry include, but are not limited to, calcium carbonate, magnesium silicates (talc), wollastonite, mica, calcium silicate, barium sulphate (barite) and kaolin (clay from China). Examples of organic fillers used to reduce the density of the final plastic article include, but are not limited to, starch, cellulose or hemicellulose, cereal flours, wood flours, tree bark flours, nut flours, hemp fibres, chicken feathers and rice hulls.

In a preferred embodiment of the first aspect, the inorganic mineral filler is selected from calcium carbonate, magnesium silicates (talc), wollastonite, mica, barium sulphate (barite), titanium dioxide, kaolin or any combination thereof.

As used herein, the expression "calcium carbonate" refers to calcium triocarbonate (IV), which, in addition to reducing the cost of the articles by occupying part of the volume of the plastic article, is mainly used because it provides tensile strength, stiffness and hardness and improves the dimensional stability of plastic articles. As used herein, the expression "magnesium silicates" refers to talc or talcum, which is mainly used because it provides impact resistance and stiffness, improves the dimensional stability of plastic articles and improves the surface finish, making it smoother. As used herein, the expression "wollastonite" refers to a calcium silicate characterised by its acicular shape (acicularity ratios of 15:1 to 20:1), which is used primarily as a substitute for glass fibre, providing similar properties such as improved tensile, flexural and compressive strength, as well as improved dimensional stability. As used herein, the term "mica" refers to minerals belonging to the group of micas, consisting of minerals belonging to a large group of silicates of alumina, iron, calcium, magnesium and alkaline minerals characterised by their easy exfoliation into thin, flexible, elastic and very shiny sheets, within the subgroup of phyllosilicates. Mainly used as a diluent and filler, especially in automotive parts as a lightweight insulation to suppress sound and vibration, also providing improved mechanical properties and greater dimensional stability, stiffness and strength. As used herein, the expression "barium sulphate" refers to baryte or barite (barium tetraoxosulphate), which is used primarily to increase the density of plastic articles, to provide acid and alkali resistance, to improve opacity and wear resistance, and to add gloss. As used herein, the term "kaolin" refers to kaolinite. Kaolin is a hydrated aluminium silicate (Al₂Si₂O₅(OH)₄), used primarily to improve thermal ageing, electrical insulation, barrier properties and abrasion resistance.

In a preferred embodiment of the first aspect, the organic mineral filler is selected from starch, cellulose, hemicellulose, cereal flours, wood flours, tree bark flours, nut flours, hemp fibres, chicken feathers, rice hulls or any combination thereof.

As used herein, the term "starch" refers to a macromolecule composed of two different glucose polymers: amylose (25 %) and amylopectin (75 %). It is the reserve carbohydrate of most plants. As used herein, the term "cellulose" refers to a biopolymer composed exclusively of β-glucose molecules, which is formed by the linkage of β-D-glucose molecules through β-1,4-O-glucosidic bonds, with formula C₆H₁₀O₅. As used herein, the term "hemicellulose" refers to is a collective term for mixtures of polysaccharides (multiple sugars), that occur in plant mass in varying compositions. Hemicelluloses are components of plant cell walls whose matrix consists of partially crystalline fibrillar cellulose. During lignification, the matrix is further intercalated with the macromolecule lignin to form lignocellulose. Hemicelluloses are part of the supporting and structural substance of cell walls and make up one quarter to one third of the plant mass. They are amorphous and do not form higher structures. The variety of carbohydrates or monosaccharides in nature is very large. They can be linked in different ways to form polymers (polysaccharides). These polymers can differ in the number of monomers. As used herein, the expression "cereal flours" refers to the fine powder obtained from ground cereals and other starchy foods. As used herein, the expression "wood flours" refers to the fine powder obtained from grinding wood. As used herein, the expression "tree bark flours" refers to the fine powder obtained by grinding the bark of trees. As used herein, the expression "nut flours" refers to the fine powder obtained by grinding walnut shells. As used herein, the expression "hemp fibres" refers to a textile fibre with properties like cotton, but with a much lower environmental impact, derived from the hemp plant. As used herein, the expression "chicken feathers" refers to bird feathers that are plucked from chickens in poultry slaughterhouses and which can be incorporated into the matrix of plastic articles as fibres. As used herein, the expression "rice hulls" refers to the fine powder obtained by grinding rice husks.

In a preferred embodiment of the first aspect, the pigment is an organic pigment selected from aromatic compounds selected from the chromophore group -N=N-(azo group), anthraquinone, phthalocyanoin, thioindigo or any combination thereof, an inorganic pigment selected from iron oxide, copper oxide, lead oxide, cobalt blue, nickel titanate, lead chromate, zinc chromate, carbon black, titanium oxide (titanium dioxide) or any combination thereof, or any combination of organic and inorganic pigments.

As used herein, the expression "chromophore group -N=N-" refers to aromatic compounds that contain the chromophore group -N=N-, and that absorb electromagnetic radiation in the visible spectrum, giving an intense colour. As used herein, the term "anthraquinone" refers to 9,10-dioxoanthracene which is an aromatic organic compound, derived from anthracene. As used herein, the term "phthalocyanoin" refers to a blue-green compound formed by the union of four isoindole groups through four nitrogen atoms, giving rise to a ring of 16 atoms: eight nitrogen and eight carbon, alternating with conjugated double bonds. As used herein, the term "thioindigo" refers to an organosulfur compound used to dye fabrics and polymers. Thioindigo is a synthetic dye related to the plant-derived dye indigo, which replaces two NH groups with two sulfur atoms to create a pink hue. Thioindigo is generated by the alkylation of the sulfur in thiosalicylic acid with chloroacetic acid. The resulting thioether is cyclized to 2-hydroxythianaphthene, which is readily converted to thioindigo. The related compound 4,7,4',7'-tetrachlorothioindigo, also a commercially important dye (Pigment Red 88), can be prepared by chlorination of thioindigo. As used herein, the expression "iron oxide" refers to chemical compounds formed by iron and oxygen used as pigments. As used herein, the expression "copper oxide" refers to chemical compounds formed by copper and oxygen, used as pigments. As used herein, the expression "lead oxide" refers to chemical compounds formed by lead and oxygen, used as pigments. As used herein, the expression "cobalt blue" refers to mineral compounds made from cobalt aluminates and silicates with a characteristic blue colour and known as such. As used herein, the expression "nickel titanate" refers to an inorganic compound with the chemical formula NiTiOs. It is a coordination compound between nickel (II), titanium (IV) and oxide ions. It has the appearance of a yellow powder. As used herein, the expression "lead chromate" refers to an inorganic compound with the chemical formula (PbCrO₄), has the appearance of a striking yellow powder. As used herein, the expression "zinc chromate" refers to an inorganic compound with the chemical formula (ZnCrO₄), is an inorganic chemical compound used as a pigment. As used herein, the expression "carbon black" refers to a common black pigment, traditionally produced from the carbonization of organic materials such as wood or bone, or the incomplete combustion of oils, fats, pitch, coal, resinous woods. As used herein, the expression "titanium oxide" refers to titanium (IV) oxide used as white pigment.

Typically, the filler and the polymer have very different properties, and by successfully combining the two, a range of materials can be produced with properties intermediate between those of the constituents. When selecting particle fillers, the first step is to understand the performance criteria of the material being used and then select or create a material that meets those criteria at a competitive cost. In essence, the choice of mineral filler depends on the trade-offs between the desired properties of the plastic article. There are at least 30 properties that can be altered by the addition of fillers, and there are several reasons why fillers are added to polymers: increase compressive strength, increase lubricity, improve abrasion resistance, improve tensile and flexural strength, modify electrical properties, reduce flammability, modify specific gravity (density), reduce shrinkage during polymerisation or moulding, modify flow, reduce cost, increase heat resistance, increase stiffness, reduce creep, improve impact resistance, reduce curing exotherm, improve dimensional stability, improve thermal conductivity, improve processability, improve moisture resistance, modify appearance, opacity and brightness, modify adhesion, either to itself (e.g. anti-blocking) or to other substrates, reduce permeability (today we could also add increase permeability) or increase degradability (e.g. starch filler added to make a biodegradable film), anti-blocking) or other substrates, reduce permeability (today we could also add increase permeability) or increase degradability (e.g. starch filler added to produce a biodegradable film), among others. It is important to note that not all fillers improve all of the above properties and that some of them can be reduced with certain fillers.

The shape of the mineral filler is an important factor in the use of fillers in polymers, affecting the processing and properties of the compound. Aspect ratio is particularly important and is valuable in improving factors such as stiffness and heat distortion temperature. For most polymer applications, the aspect ratio of the mineral filler is the most important shape property. Aspect ratio is defined as the width divided by the height, where the width is the largest value, of the mineral aggregate particles. For particles, it can be thought of as the ratio of the largest to the smallest dimension and has a major influence on processing and many important properties of the compound. Particulate fillers can be described as: approximately isotropic, laminated and acicular. Laminated and acicular fillers both have significant proportions. Care must be taken to distinguish acicular particles from true fibres, although there may be some overlap. The aspect ratio of acicular fillers will not exceed 20:1, while fibres will generally be much larger. Isotopes can be divided into spherical or irregular shapes, with truly spherical particles (e.g. glass beads) being the latter. Most charge particles have a low aspect ratio, e.g. calcium carbonate, dolomite, barium sulphate or silica, which tend to have a round or blocky morphology. Those with higher aspect ratios include wollastonite (needle), talc (laminar), mica (laminar) and kaolin (laminar). The type selected will depend on the properties required in the plastic article and the trade-off between the different properties.

The masterbatch produced in accordance with the present invention allows the selection of any of the indicated minerals or others that may be required to impart a particular property to the final plastic article. A fundamental fact of the invention is the fact that it provides not only the mineral filler itself, as it may also comprise pigments, fibres or any combination thereof, but also that the binder additives help to improve the processability properties of the resin itself by obtaining the plastic article. An outstanding feature of the invention is that it offers the plastics industry the ability to supply aggregates in higher concentrations, resulting in significant improvements such as reduced purchase volumes and optimized use of plastic resin, especially if it is recycled plastic resin, by the manufacturer of plastic articles.

In another preferred embodiment of the first aspect, the masterbatch composition comprises from 10 wt. % to 20 wt. % of binder additives, preferably from 15 wt. % to 20 wt. %, more preferably 12 wt. %. The binder additives may have a wt. % of 10 wt. %, 11 wt. %, 12 wt. %, 13 wt. %, 14 wt. %, 15 wt. %, 16 wt. %, 17 wt. %, 18 wt. %, 19 wt. % or 20 wt. %.

In another preferred embodiment of the first aspect, the binder additives are solid at room temperature and selected from fatty acids, fatty acid esters, waxes, waxes grafted with maleic anhydride, functional aluminium acid ester compounds, titanate coupling agent, calcium stearate or any combination thereof. Even more preferably, the binder additive is at least one of the following and comprises from 0 wt. % to 10 wt. % of fatty acid, excluded 0, wherein the fatty acid is preferably a stearic acid from 3 wt. % to 6 wt. % (may have a wt. % of 0.5 wt. %, 1 wt. %, 1.5 wt. %, 2 wt. %, 2.5 wt. %, 3 wt. %, 3.5 wt. %, 4 wt. %, 4.5 wt. %, 5 wt. %, 5.5 wt. %, 6 wt. %, 6.5 wt. %, 7 wt. %, 7.5 wt. %, 8 wt. %, 8.5 wt. %, 9 wt. %, 9.5 wt. % or 10 wt. %), from 0 wt. % to 10 wt. % of long-chain fatty acid ester (C14-C16) with high molecular weight alcohols (C16 to C30), excluded 0, preferably from 3 wt. % to 8 wt. % (may have a wt. % of 0.5 wt. %, 1 wt. %, 1.5 wt. %, 2 wt. %, 2.5 wt. %, 3 wt. %, 3.5 wt. %, 4 wt. %, 4.5 wt. %, 5 wt. %, 5.5 wt. %, 6 wt. %, 6.5 wt. %, 7 wt. %, 7.5 wt. %, 8 wt. %, 8.5 wt. %, 9 wt. %, 9.5 wt. % or 10 wt. %), from 0 wt. % to 4 wt. % of functional aluminium acid ester compounds, excluded 0, preferably from 0.5 wt. % to 1.5 wt. % (may have a wt. % of 0.5 wt. %, 1 wt. %, 1.5 wt. %, 2 wt. %, 2.5 wt. %, 3 wt. %, 3.5 wt. % or 4 wt. %), from 0 wt. % to 4 wt. % of waxes grafted with maleic anhydride, excluded 0, preferably from 0.5 wt. % to 1.5 wt. % (may have a wt. % of 0.5 wt. %, 1 wt. %, 1.5 wt. %, 2 wt. %, 2.5 wt. %, 3 wt. %, 3.5 wt. % or 4 wt. %), from 0 wt. % to 4 wt. % of titanate coupling agent, excluded 0, preferably from 0.5 wt. % to 1.5 wt. % (may have a wt. % of 0.5 wt. %, 1 wt. %, 1.5 wt. %, 2 wt. %, 2.5 wt. %, 3 wt. %, 3.5 wt. % or 4 wt. %), or any combination thereof, and wherein all the weight percentages (wt. %) are relative to the total weight of the composition. The binder additive or the combination thereof can be perfectly defined by a person skilled in the art, depending on the composition of the masterbatch.

Preferably the solid binding additives at room temperature comprises a melting temperature above 45ºC, preferably from 55 to 50ºC, and more preferably above 65ºC. The temperature affects the masterbatch composition in that it becomes sticky as a result of the additives becoming liquid or having a very low melting point. This can lead to the exudation of these additives, also known as wetness, on the surface of the masterbatch bead, which may subsequently cause agglutination.

As used herein, the expression "room temperature" refers to an ambient temperature of less than 45ºC. As used herein, the expression "fatty acids" refers to a biomolecule of lipid nature formed by a long linear hydrocarbon chain, of different length or number of carbon atoms, at the end of which there is a carboxyl group, that is, an oxygen doubly linked to carbon and a hydroxyl group (OH) linked to the same As used herein, the expression "fatty acid esters" refers to type of ester that results from the combination of a fatty acid with an alcohol. As used herein, the term "waxes" refers to esters of long-chain fatty acids (C14-C36) with high molecular weight alcohols, i.e. long-chain alcohols (C16 to C30); including especially polyethylene wax can be manufactured by direct polymerization of ethylene under special conditions that control the molecular weight and chain branching of the final polymer, a very low molecular weight. As used herein, the expression "waxes grafted with maleic anhydride" refers to a polyethylene wax grafted with maleic anhydride. As used herein, the expression "functional aluminium acid ester compounds" refers to a chemical compound with the formula Al(C₁₈H₃₅O₂)₃. It is presented as a white powder, has lubricating properties and its main application is as an additive in the production of plastics to facilitate the removal of parts from the moulds. As used herein, the expression "titanate coupling agent" refers to titanium salts used in the plastics industry as a bridge between inorganic substances used as polymer fillers in plastic articles and the plastic resin itself. As used herein, the expression "calcium stearate" refers to a calcium carboxylate, classified as calcium soap with formula C₃₆H₇₀CaO₄, obtained by the reaction of stearic acid and lime.

In a preferred embodiment of the first aspect, the masterbatch composition further comprises additional additives of less than 15 wt. % selected from liquid additional additive at room temperature selected from plasticizers, processing aids, antistatic agents, anti-UV agents, hardening agents, anti-fogging agents, compatibilizers, slipping agents, flame retardants, antioxidants, light stabilizers, inks and biocidal agents, thermal stabilizers or any combination thereof, or any combination thereof of liquid and non-liquid additional additives, and wherein all the weight percentages (wt. %) are relative to the total weight of the composition. The additional additives may be in a wt. % of less than 15 wt. %, 14wt. %, 13 wt. %, 12 wt. %, 11 wt. %, 10 wt. %, 9 wt. %, 8 wt. %, 7 wt. %, 6 wt. %, 5 wt. %, 4 wt. %, 3 wt. %, 2 wt. % or less than 1 wt. %. In the case of the use of a liquid binder additive, it is the preference of the invention to comprise from 0.25 wt. % from 2 wt. %, more preferably from 0.25 wt. % to 1 wt. %, wherein all the weight percentages (wt. %) are relative to the total weight of the composition, the liquid binder additive not being higher than 2 wt. %. The liquid binder additive may be in a wt. % of 0.25 wt. %, 0.50 wt. %, 0.75 wt. %, 1 wt. %, 1.25 wt. %, 1.50 wt. %, 1.75 wt. % or 2 wt. %.

Such additional additives may be mixed at a suitable time during the mixing of the components to form the masterbatch composition. The exact type and quantity of additional additives can be adapted by a person skilled in the art according to the type of composition of the masterbatch and the information disclosed in the present invention. Once a binder mixture has been decided upon, laboratory tests shall be carried out on the mixture to determine the softening temperature. As used herein, the expression "softening temperature" refers to the fact that all the compositions referred to in the invention are solid at room temperature (at least up to temperatures of 40ºC), so that when subjected to temperature, their spreadability is achieved, spreadability being defined as the ease with which a product can be spread in a thin and uniform layer on a surface. The raw materials of the masterbatches referred to in this invention may be in solid form (e.g., powder, beads, flakes, or granules) or in liquid form. Preferably, the composition of the masterbatch is in a solid physical form: in the form of a micronized powder in terms of mineral fillers, pigments, fibres or any combination thereof; and solids at room temperature in terms of extra additives and binding additives, without excluding the possibility of adding some liquid additives at room temperature.

As used herein, the term "plasticizers" refers to chemical compounds commonly used by the plastics industry to increase the flexibility and toughness of a polymer for applications such as tubes and films. As used herein, the expression "processing aids" refers to chemical compounds commonly used by the plastics industry to improve the processability of plastic during its transformation when manufacturing a plastic article. As used herein, the expression "antistatic agents" refers to chemical compounds commonly used by the plastics industry to reduce the static charge of plastic articles, especially plastic sheets and films. As used herein, the term "anti-UV agents" refers to chemical compounds commonly used by the plastics industry to increase resistance to sunlight when articles are to be left outdoors. As used herein, the expression "hardening agents" refers to chemical compounds commonly used by the plastics industry to improve the toughness of plastic articles, especially their flexural and tensile properties. As used herein, the expression "anti-fogging agents" refers to chemical compounds commonly used by the plastics industry to prevent moisture condensation, forming water droplets, on the surface of the plastic article. As used herein, the term "compatibilizers" refers to chemical compounds commonly used by the plastics industry to enable the mixing of two or more immiscible polymeric resins, allowing the mixing to take place during the manufacturing process of the plastic article while imparting stability to it, such that the polymers behave as if they were truly miscible with each other. As used herein, the expression "slipping agents" refers to chemical compounds used by the plastics industry to reduce the adhesion between the mould and the injection moulded plastic resin when manufacturing articles by injection moulding. As used herein, the expression "flame retardants" refers to chemical compounds used by the plastics industry to increase the fire resistance of the plastic article, inhibiting, reducing or delaying its combustion. As used herein, the term "antioxidants" refers to chemical compounds used by the plastics industry to increase the durability and resistance of plastic items to aging caused by external agents (heat, light, mechanical stress, etc.). As used herein, the expression "light stabilizers" refers to chemical compounds commonly used by plastics industry to ensure that plastic products maintain their aesthetic appeal and physical properties over time, thereby improving their utility and durability under the effects of light and heat. As used herein, the term "inks" refers to chemical compounds, soluble in plastic resin, commonly used by the plastics industry to colour plastic articles, especially transparent or translucent ones. As used herein, the expression "biocidal agents" refers to chemical compounds commonly used by the plastics industry in the formulation of plastic articles to prevent them from deteriorating due to the action of microorganisms by inhibiting the growth of bacteria, fungi, mold (fungi or mildew), viruses and other microorganisms. As used herein, the expression "thermal stabilizers" refers to chemical compounds commonly used by the plastics industry to prevent degradation of plastics by heat, especially during processing.

With respect to the second aspect of the invention, the shape and length of the pellet can be adapted based on the final masterbatch composition and on the final application of the plastic article. The masterbatch composition referred in the present invention is preferably a cylindrical pellet, with a diameter from 2.00 mm to 6.00 mm being preferable, based on most end applications for the manufacture of plastic, more preferably 2.5 mm to 4.00 mm, even more preferably from 2.75 mm to 3.50 mm. The diameter may be 2.00 mm, 2.25 mm, 2.50 mm, 2.75 mm, 3.00 mm, 3.25 mm, 3.50 mm, 3.75 mm, 4.00 mm, 4.25 mm, 4.50 mm, 4.75 mm, 5.00 mm, 5.25 mm, 5.50 mm, 5.75 mm or 6.00 mm. As to the length of the pellet, from 2.50 mm to 6.00 mm, preferably from 3.0 mm to 5.5 mm, and more preferably from 4.50 to 5.00 mm. The length may be 2.50 mm, 2.75 mm, 3.00 mm, 3.25 mm, 3.50 mm, 3.75 mm, 4.00 mm, 4.25 mm, 4.50 mm, 4.75 mm, 5.00 mm, 5.25 mm, 5.50 mm, 5.75 mm or 6.00 mm. The shape and length of the masterbatch of this invention will be advantageously adapted to the method of conversion, extrusion, injection, moulding, rotomoulding, final polymer-based mixing leading to the production of the desired plastic article.

With regard to the third aspect of the invention, the present invention can be used in a thermoplastic polymer resin that constitutes the majority of plastic articles to be manufactured. The base polymers on which this invention is based are selected from polyolefin, polyethylene (PE), polypropylene (PP), polymethylpentene (PMP), polybutene-I (PB-1), polyisobutylene (PIB), ethylene propylene rubber (EPR), ethylene propylene diene monomer rubber (EPDM), cyclic olefin copolymer (COC) and derivatives or any combination thereof. The base polymer or the combination thereof can be perfectly defined by a person skilled in the art, depending on the desired final plastic article. As used herein, the term "plastic article", also called plastic product or plastic item, which may be used interchangeably, refers to any article made of at least one polymer, such as plastic sheet, film, tube, rod, profile, moulded part, solid block, fibre, etc. Preferably, the plastic article is a manufactured product such as rigid or flexible packaging, agricultural films, bags and sacks, disposable or non-disposable items. Preferably, the plastic article consists of a mixture of semi-crystalline and/or amorphous polymers or semi-crystalline polymers and additives. Plastic articles may contain additional substances or additives such as plasticisers, mineral or organic fillers.

As used herein, the term "polymer" refers to a chemical compound or mixture of compounds whose structure is made up of multiple repeating units and linked by covalent chemical bonds. In the context of the present invention. The term "polymer" comprises natural or synthetic polymers, comprising a single type of repeating unit (i.e., homopolymers) or different types of repeating units (i.e., block copolymers and random copolymers). For example, synthetic polymers comprise polymers derived from petroleum oil or bio-based polymers, such as polyolefins, aliphatic or aromatic polyesters, polyamides, polyurethanes, and polyvinyl chloride. Natural polymers include lignin and polysaccharides, such as cellulose, hemicellulose, starch, and derivatives thereof, which may or may not be plasticized. Preferred aliphatic polyesters for use in the invention include, without limitation, polylactic acid (PLA), poly(L-lactic acid) (PLLA), poly(D-lactic acid) (PDLA), poly(D,L-lactic acid) (PDLLA), stereo-complex PLA (scPLA), polyglycolic acid (PGA), polyhydroxyalkanoate (PHA), polycaprolactone (PCL), polybutylene succinate (PBS), and semi-aromatic polyethylenes are selected from polyethylene terephthalate (PET), polytrimethylene terephthalate (PTT), polybutylene terephthalate (PBT); and the semi-aromatic polyethylenes are selected from polyethylene terephthalate (PET), polytrimethylene terephthalate (PTT), polybutylene terephthalate (PBT), polyethylene isosorbide terephthalate (PEIT), polybutylene succinate adipate (PBSA), polybutylene adipate terephthalate (PBAT), polyethylene furanoate (PEP), polyethylene adipate) (PEA), polyethylene naphthalate (PEN) and derivatives or any combination thereof. Preferred polyamide polymers (also known as nylon) for use in the invention include, but are not limited to, polyamide-6, poly(-caprolactam), polycaproamide (PA6), polyamide-6,6, poly(hexamethyleneadipamide) (PA6,6), poly(11-aminoundecanoamide) (PA12), poly(tetramethyleneadipamide) (PA4,6), poly(pentamethyleneadipamide) (PA12), poly(11-aminoundecanoamide) (PAII), polidodecanolactam (PA12), poly(tetramethyleneadipamide) (PA4,6), poly(pentamethylene)sebacamide) (PA5,10), sebacamide) (PA6,10), adipamide) (PAMXD6), copolymer (PA66/6T), poly( hexametilene azelaamida) (PA6. 9), poly(hexametilene poly(hexametilene dodecanoamide) (PA6,12), poly(m-xylene-polyhexametilene adipamide/polyhexametilene octalamide), polyhexametilene adipamide/polyhexametilene octalamide copolymer (PA66/61) and their derivatives or blends. Preferred vinyl polymers include polystyrene (PS), polyvinyl chloride (PVC), polyvinyl chloride (PVdC), ethylene vinyl acetate (EVA), ethylene vinyl alcohol (EVOH), polyvinyl alcohol (PVOH) and derivatives or blends of these materials.

In a preferred embodiment of the third aspect, the plastic article comprises from 2 wt. % to 80 wt. % of the masterbatch composition of the present invention by weight relative to the final weight of the plastic article. In the same way as the shape of the masterbatch, the composition of the masterbatch can be adapted to the final plastic article. The amount of masterbatch mixed with a base polymer depends on the concentration of each component of the masterbatch and the desired and/or required amount in the base polymer of the plastic article to be produced.

Regarding the fourth aspect of the invention, the present invention is intended for use in the manufacture of plastic articles made with thermoplastic plastic resins in accordance with the third aspect. Thermoplastics are the most widely used type of plastic resin because of their versatility and reworkability. They can be easily transformed and retransformed many times by heating and cooling. This makes them ideal for a wide range of manufacturing applications and for recycling. There are currently a number of key processes used to manufacture thermoplastic plastic articles on an industrial scale. The main processes are extrusion, injection moulding, blow moulding and thermoforming. The exact process used depends on the type of plastic resin and the desired shape and properties of the final product.

As used herein, the expression "sheet extrusion" refers to the extrusion process in which the extruder head is a flat-shaped die through which the extruded sheet comes out in a flat shape and is cooled through cooling rollers and transported to cutting and winding stations. As used herein, the expression "blown film extrusion" refers to the extrusion process in which the extruder head is a die and an annular nozzle, usually directed upwards, through which the extruded film comes out in a tubular shape. While the extrudate comes out of the nozzle, air is injected through it, which causes the extrudate to swell in the form of a cylindrical bubble that rises to the rollers located at the top that assists in cooling. The fundamental difference between flat sheet extrusion and blown film extrusion lies in the thickness of the final product. Thus, film is understood to be a plastic sheet with a thickness of less than 500 microns and more commonly, thicknesses of less than 250 microns. As used herein, the term "profile extrusion" refers to the extrusion process in which the extruder head is a die that gives a predetermined desired shape to the plastic flow, so that the extrudate takes a continuous form that can be a tube, bar or more complex profiles. As used herein, the expression "injection moulding" refers to the extrusion process that directs the molten extruded material into a mould with a closed cavity, completely filling this closed cavity and, once the mould is filled with the extruded material, it takes the shape of the cavity and solidifies to create the final product. As used herein, the expression "blow moulding" refers to the extrusion process that directs the molten extruded material into a water-cooled mould and, once the mould is filled with the extrudate, air is injected into it, causing it to inflate, like a balloon, with the plastic coming into contact with the walls, at which point the plastic cools and stiffens. This is the system used to produce containers, such as bottles, carafes, etc.

All the cases presented as examples of the transformation of plastic resins for the production of plastic articles have in common the need to "pre-mix" the raw materials in the feed hopper of the extruder/injector element. It is in this previous pre-mixing phase that the masterbatch produced according to the innovation claimed here can be added, this masterbatch providing the desired mineral filler, pigments, fibres or any combination thereof, biding additives and, in addition, to other additional additives that improve the workability of the total mixture in the production of the plastic article or that improve the final characteristics of the plastic article.

### BRIEF DESCRIPTION OF FIGURES

The following detailed description of specific embodiments of the present disclosure can be best understood when read in conjunction with the following drawing.
**FIG. 1****:** Illustrates the product obtained with one of the compositions (formulations) obtained in accordance with the present invention. The product shown comprises 88 wt. % of calcium carbonate granules and 12 wt. % of binder additives.
**FIG. 2****:** Illustrates a sheet manufactured with one of the compositions (formulations) obtained according to the present invention.
**FIG. 3****:** Illustrates the section of the granulator die section, where "D" is the desired diameter for the filler masterbatch, "L" is the compression cylindrical length, "e" is the total thickness of the flat die, "a" is the input length and "b" is the output length.

### EXAMPLES

The following examples are provided to provide those of ordinary skill in the art with a complete disclosure and description of how the compounds, compositions, articles, devices and/or methods claimed herein are made and evaluated and are intended to be purely exemplary and not to limit the disclosure. An effort has been made to ensure accuracy with respect to numerical data (e.g., amounts, temperature, etc.), but some errors and variations should be accounted for. Unless otherwise stated, parts are by weight, temperature is in degrees Celsius or at ambient temperature, and pressure is at or near atmospheric. Unless otherwise stated, composition percentages are by weight.

In the development of the present invention, the D50 is used when referring to the particle size of a solid. The D50, also known as the mean particle size, refers to the particle size value corresponding to the percentage of the cumulative distribution that reaches 50%. This is a typical particle size value that exactly divides the population into two equal parts, i.e. 50% of the particles. Thus, if the D50 of a sample is 3 µm, it means that of all the particles of particle size that make up the solid used in the composition, the particles larger than 3 µm represent 50% and the particles smaller than 3 µm also represent 50%. D50 is often used to describe the average particle size of powders. To measure particle size and size distribution from which the D50 is known, the use of laser diffraction particle size and size distribution instruments such as the Mastersizer 3000 is recommended.

When the optical characteristic L* is used here, it refers to the property of "brightness". It is a characteristic of all objects to have a whiteness and a brightness. In the case of solids used as fillers for the compounds used here, L* is chosen when it is desired to express their degree of "whiteness" because it is a standard in the industry. The maximum value of L* is 100. Values higher than 97-98 are standard values for solids that are considered very white in the plastics industry. The brightness and/or whiteness values given here have been obtained according to the UNE EN 8-117-87 standard.

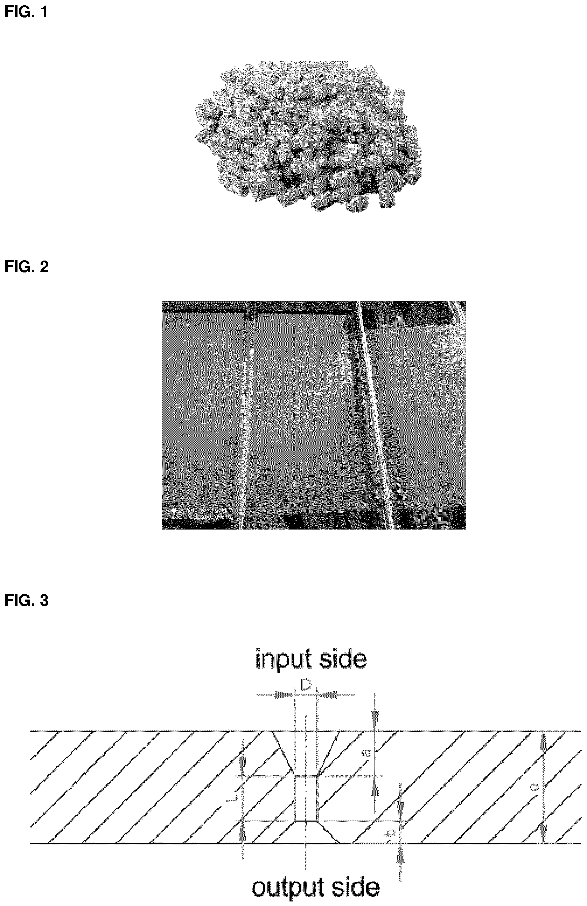

There are numerous variations and combinations of mixing conditions, e.g. selected mineral compounds, pigments, fibres or any combination thereof, component concentrations, binder additives, addition of other desired additional additives, operating temperatures depending on the selected additive mix. Only reasonable and routine experimentation will be required to optimize such process conditions. The embodiments of the present invention have shown improvements in the manufacturing process of plastic articles at laboratory and industrial levels. These improvements have been confirmed in the various processes in which they have been tested. The improvements in the extrusion process will be listed here, both for sheet, film and profile:
- Reduction of the operating temperature: The inventor has carried out tests at laboratory level and confirmed at industrial level showed that, compared to the use of a standard commercial calcium carbonate masterbatch, the extruder temperature profile had to be reduced in order to maintain the same level of fluidity, as shown in Table 1.
- Increase productivity: The inventor also observed that the speed of the extruder had to be increased while maintaining the torque and pressure, which implies an increase in productivity with the product obtained as claimed here (FIG. 2).

**Table 1: Sheet extrusion conditions in laboratory extruder.**

| | Temperature profile (ºC) | | | | | V (rpm) | Pressure (bar) | Engine torque (N/m2) |
|---|---|---|---|---|---|---|---|---|
| | Z1 | Z2 | Z3 | Z4 | Die head | | | |
| **Standard masterbatch** | 180 | 200 | 220 | 210 | 200 | 90 | 60 | 3.0 |
| **Masterbatch of invention** | 160 | 170 | 175 | 175 | 190 | 120 | 65 | 3.8 |

The product tested in Table 1 corresponds to Composition 1 (Formula 1) in Table 2. The product was obtained by the inventor in the plant using a high-speed mixer with a total volume of 500 I and a production batch of 200 kg. A two-roller pelletizer with a 350 mm plate was used for granulation. The specific consumption was 40 kW/ton (0.045 kW/kg), a significant energy saving compared to the processes currently used to manufacture filler masterbatch with plastic as a binding element.

Thus, the invention involves:
1. Energy savings during the actual production of the invention claimed herein.
2. Energy savings during its application in the manufacture of plastic articles, in the manufacture of plastic articles by extrusion (sheet, film or profiles).
3. Reduction of the operating costs of production of plastic articles, beyond the energy costs seen in the previous point, by assuming an increase in productivity, especially in the manufacturing processes of plastic articles by extrusion (sheet, film or profiles).
4. The fact that plastic is not used as a binding element in the production of this invention means reducing the number of transformations of the plastic, extending its useful life. We must add to this very important improvement the fact of reducing the number of trips that the plastic has to make when, as is the case in most current cases and in accordance with the legislative trend required by the EU, and the need to protect the environment, it is recycled plastic, assuming a saving in CO₂ emissions. (sheet, film or profiles).
5. The fact that plastic is not used as a binding element in the production of this invention means reducing the number of transformations of the plastic, extending its useful life. We must add to this very important improvement the fact of reducing the number of trips that the plastic has to make when, as is the case in most current cases and in accordance with the legislative trend required by the EU, and the need to protect the environment, it is recycled plastic, assuming a saving in CO₂ emissions.

The present claims are based on laboratory tests of different compositions, both in terms of the use of different mineral fillers and combinations thereof and in terms of the use of different types of binder additives. Table 2 illustrates a series of compositions tested in the laboratory and at an industrial level by the inventor, without this table being a restrictive list, but rather an indication of the breadth of application of this invention.

**Table 2: Possible compositions.**

| **EXAMPLE OF POSSIBLE COMPOSITIONS (FORMULAS)** | | | | |
|---|---|---|---|---|
| **Formula 1** | | | | |
| **Type** | **Compound name** | **Cas number** | **Percentage by weight** | **Description** |
| Solid | Coated calcium carbonate | 471-34-1 | 88,00% | D50 = 3 Microns // L*>95 (Supplier: OMYA) |
| Additive | Stearic acid | 57-11-4 | 6,00% | Stearic acid: 50-75% // Palmitic acid: 10-40 |
| Additive | Non-oxidized wax | 9002-88-4 | 6,00% | Drop point: 108-110ºC // Viscosity (150ºC): 50-80 cP |

| **Formula 2** | | | | |
|---|---|---|---|---|
| **Type** | **Compound name** | **Cas number** | **Percentage by weight** | **Description** |
| Solid | Coated calcium carbonate | 471-34-1 | 88,00% | D50 = 3 Microns // L*>95 (Supplier: OMYA) |
| Additive | Stearic acid | 57-11-4 | 5,00% | Stearic acid: 50-75% // Palmitic acid: 10-40 |
| Additive | Non-oxidized wax | 9002-88-4 | 7,00% | Drop point: 108-110ºC // Viscosity (150ºC): 50-80 cP |

| **Formula 3** | | | | |
|---|---|---|---|---|
| **Type** | **Compound name** | **Cas number** | **Percentage by weight** | **Description** |
| Solid | Coated calcium carbonate | 471-34-1 | 88,00% | D50 = 3 Microns // L*>95 (Supplier: OMYA) |
| Additive | Stearic acid | 57-11-4 | 4,00% | Stearic acid: 50-75% // Palmitic acid: 10-40 |
| Additive | Non-oxidized wax | 9002-88-4 | 8,00% | Drop point: 108-110ºC // Viscosity (150ºC): 50-80 cP |

| **Formula 4** | | | | |
|---|---|---|---|---|
| **Type** | **Compound name** | **Cas number** | **Percentage by weight** | **Description** |
| Solid | Coated calcium carbonate | 471-34-1 | 88,00% | D50 = 3 Microns // L*>95 (Supplier: OMYA) |
| Additive | Stearic acid | 57-11-4 | 5,00% | Stearic acid: 50-75% // Palmitic acid: 10-40 |
| Additive | Non-oxidized wax | 9002-88-4 | 6,00% | Drop point: 108-110ºC // Viscosity (150ºC): 50-80 cP |

| **EXAMPLE OF POSSIBLE COMPOSITIONS (FORMULAS)** | | | | |
|---|---|---|---|---|
| Additive | Dispersing agent | SOLDPLUS^{™} DP310 | 1,00% | Supplier: LUBRIZOL |

| **Formula 5** | | | | |
|---|---|---|---|---|
| **Type** | **Compound name** | **Cas number** | **Percentage by weight** | **Description** |
| Solid | Coated calcium carbonate | 471-34-1 | 88,00% | D50 = 3 Microns // L*>95 (Supplier: OMYA) |
| Additive | Stearic acid | 57-11-4 | 5,50% | Stearic acid: 50-75% // Palmitic acid: 10-40 |
| Additive | Non-oxidized wax | 9002-88-4 | 6,50% | Drop point: 108-110ºC // Viscosity (150ºC): 50-80 cP |
| Additive | Dispersing agent | SOLDPLUS^{™} DP310 | 0,50% | Supplier: LUBRIZOL |

| **Formula 6** | | | | |
|---|---|---|---|---|
| **Type** | **Compound name** | **Cas number** | **Percentage by weight** | **Description** |
| Solid | Coated calcium carbonate | 471-34-1 | 88,00% | D50 = 2 Microns // L*=96 (Supplier: OMYA) |
| Additive | Stearic acid | 57-11-4 | 6,00% | Stearic acid: 50-75% // Palmitic acid: 10-40 |
| Additive | Non-oxidized wax | 9002-88-4 | 6,00% | Drop point: 108-110ºC // Viscosity (150ºC): 50-80 cP |

| **Formula 7** | | | | |
|---|---|---|---|---|
| **Type** | **Compound name** | **Cas number** | **Percentage by weight** | **Description** |
| Solid | Coated calcium carbonate | 471-34-1 | 86,00% | D50 = 2 Microns // L*>96 (Supplier: OMYA) |
| Additive | Stearic acid | 57-11-4 | 6,00% | Stearic acid: 50-75% // Palmitic acid: 10-40 |
| Additive | Non-oxidized wax | 9002-88-4 | 8,00% | Drop point: 108-110ºC // Viscosity (150ºC): 50-80 cP |

| **Formula 8** | | | | |
|---|---|---|---|---|
| **Type** | **Compound name** | **Cas number** | **Percentage by weight** | **Description** |
| Solid | Coated calcium carbonate | 471-34-1 | 88,00% | D50 = 3 Microns // L*>95 (Supplier: MINERA SANTO ANGEL, S.A.) |
| Additive | Stearic acid | 57-11-4 | 6,00% | Stearic acid: 50-75% // Palmitic acid: 10-40 |
| Additive | Non-oxidized wax | 9002-88-4 | 6,00% | Drop point: 108-110ºC // Viscosity (150ºC): 50-80 cP |

| **Formula 9** | | | | |
|---|---|---|---|---|
| **Type** | **Compound name** | **Cas number** | **Percentage by weight** | **Description** |
| Solid | Coated calcium carbonate | 471-34-1 | 88,00% | D50 = 3 Microns // L*>95 (Supplier: OMYA) |
| Additive | Stearic acid | 57-11-4 | 6,00% | Stearic acid: 50-75% // Palmitic acid: 10-40 |
| Additive | Non-oxidized wax | 9002-88-4 | 6,00% | Drop point: 114-120ºC // Viscosity (150ºC): 50-80 cP |

| **Formula 10** | | | | |
|---|---|---|---|---|
| **Type** | **Compound name** | **Cas number** | **Percentage by weight** | **Description** |
| Solid | Coated calcium carbonate | 471-34-1 | 44,00% | D50 = 2 Microns // L*>95 (Supplier: OMYA) |
| Solid | Talc | 14807-96-6 | 44,00% | D50 = 4 Microns // L* > 98 (Supplier: ANAND TALC) |
| Additive | Stearic acid | 57-11-4 | 6,00% | Stearic acid: 50-75% // Palmitic acid: 10-40 |
| Additive | Non-oxidized wax | 9002-88-4 | 6,00% | Drop point: 114-120ºC // Viscosity (150ºC): 50-80 cP |

| **Formula 11** | | | | |
|---|---|---|---|---|
| **EXAMPLE OF POSSIBLE COMPOSITIONS (FORMULAS)** | | | | |
| **Type** | **Compound name** | **Cas number** | **Percentage by weight** | **Description** |
| Solid | Talc | 14807-96-6 | 86,00% | D50 = 4 Microns // L* > 98 (Supplier: ANAND TALC) |
| Additive | Stearic acid | 57-11-4 | 7,00% | Stearic acid: 50-75% // Palmitic acid: 10-40 |
| Additive | Non-oxidized wax | 9002-88-4 | 7,00% | Drop point: 114-120ºC // Viscosity (150ºC): 50-80 cP |

| **Formula 12** | | | | |
|---|---|---|---|---|
| **Type** | **Compound name** | **Cas number** | **Percentage by weight** | **Description** |
| Solid | Coated calcium carbonate | 471-34-1 | 30,00% | D50 = 2 Microns // L*>95 (Supplier: OMYA) |
| Solid | Titanium Oxide | 13463-67-7 | 56,00% | Rutilo (Supplier: TLD Vietnam) |
| Additive | Stearic acid | 57-11-4 | 7,00% | Stearic acid: 50-75% // Palmitic acid: 10-40 |
| Additive | Non-oxidized wax | 9002-88-4 | 7,00% | Drop point: 114-120ºC // Viscosity (150ºC): 50-80 cP |

| **Formula 13** | | | | |
|---|---|---|---|---|
| **Type** | **Compound name** | **Cas number** | **Percentage by weight** | **Description** |
| Solid | Titanium dioxide | 13463-67-7 | 86,00% | Rutilo (Supplier: TLD Vietnam) |
| Additive | Stearic acid | 57-11-4 | 7,00% | Stearic acid: 50-75% // Palmitic acid: 10-40 |
| Additive | Non-oxidized wax | 9002-88-4 | 7,00% | Drop point: 114-120ºC // Viscosity (150ºC): 50-80 cP |

| **Formula 14** | | | | |
|---|---|---|---|---|
| **Type** | **Compound name** | **Cas number** | **Percentage by weight** | **Description** |
| Solid | Coated Calcium carbonate | 471-34-1 | 60,0%0 | D50 = 2 Microns // L*>95 (Supplier: OMYA) |
| Solid | Fibre glass | 65997-17-3 | 15,00% | |
| Additive | Stearic acid | 57-11-4 | 7,00% | Stearic acid: 50-75% // Palmitic acid: 10-40 |
| Additive | Coupling agent | | 2,00 | HS Code: 3403190000 // ML110 (Kunshan Mijisena Composite Materials Co, Ltd) |
| Additive | Non-oxidized wax | 9002-88-4 | 7,00% | Drop point: 114-120ºC // Viscosity (150ºC): 50-80 cP |

| **Formula 15** | | | | |
|---|---|---|---|---|
| **Type** | **Compound name** | **Cas number** | **Percentage by weight** | **Description** |
| Solid | Barite | 17727-43-7 | 86,00% | D50 = 5 Microns // L*>94 (Supplier: TLD Vietnam) |
| Additive | Stearic acid | 57-11-4 | 7,00% | Stearic acid: 50-75% // Palmitic acid: 10-40 |
| Additive | Non-oxidized wax | 9002-88-4 | 7,00% | Drop point: 114-120ºC // Viscosity (150ºC): 50-80 cP |

Tabel 3 illustrates the main mineral fillers tested, indicating both their contribution to plastic articles and the main plastic articles in which they are commonly incorporated. The list indicated in Table 3 is not exhaustive and only shows the main characteristics of each of the mineral fillers shown.

**Table 3: Main contributions and applications of Table 2.**

| **FILLERS TESTED IN LABORATORY ACCORDING TO PRESENT INVENTION** | | |
|---|---|---|
| **Calcium carbonate** | **Contribution** | Increased tensile strength, rigidity and hardness. |
| | | Improved processability of polymers, facilitating their extrusion, injection moulding and other processes. |
| | | Improved dimensional stability of plastic articles. |
| | **Applications** | Profiles and beading for the construction industry. |
| | | Blinds. |
| | | Profiles, imitation wood sheets. |
| | | Plastic sheets and films: manufacture of sheets and bags. |
| | | Moulded parts. |
| **Talc** | **Contribution** | Increased impact resistance and rigidity. |
| | | Improved dimensional stability of plastic articles. |
| | | Improved surface finish: reducing surface defects and irregularities. |
| | **Applications** | Profiles for the construction industry. |
| | | Visible parts in the automotive sector. |
| | | Sheets and films with improved surface finish. |
| **Barite** | **Contribution** | Increased density of the plastic article |
| | | Increased resistance to acids, alkalis. |
| | | Increased opacity. |
| | | Increased wear resistance. |
| | | Increased gloss. |
| | **Applications** | Profiles for the construction industry construction. |
| | | Drain pipes. |
| | | Sound insulation foams. |
| **Wollastonite** | **Contribution** | Increased tensile and flexural strength of the plastic article. |
| | | Increased compressive strength. |
| | | Increased opacity. |
| | | Improved dimensional stability of plastic articles. |
| | **Applications** | Profiles for the construction industry construction. |
| | | Sound insulation foams. |
| **Titanium dioxide** | **Contribution** | Whiteness and opacity. |
| | **Applications** | Any white article. |
| **Fibre glass** | **Contribution** | Increased tensile and flexural strength of the plastic article. Increase fatigue resistance. |
| | **Applications** | Any plastic item, especially in construction applications. |
| **Pigments** | **Contribution** | Aspect of the desired colour. |
| | **Applications** | Any plastic article. |

### Method for producing a masterbatch composition according to the present invention.

The manufacturing process of the masterbatch of this invention comprises the following steps:

### Composition and laboratory conditions:

1. Definition of the composition in accordance with the first aspect of the invention.
   I. Selection of mineral filler, pigment, fibre or any combination thereof, to be included in the composition.
   II. Selection of binder additives and, optionally if desired, one of the additional additives in accordance with the first aspect of the invention.
2. Determination of average melting temperature of binder and additional additives:
   I. Mathematical calculation of the average melting temperature as a weighted average of the melting temperatures of each of the selected additives.
   II. Verification of the average operating temperature, taking as a reference the theoretical average melting temperature calculated in the previous point. Testing of the selected mixture using a standard high-speed laboratory mixer.
      i. Weigh the components of the desired composition, taking as a reference that the total volume occupied by all raw materials is less than 40% of the volume of the standard high-speed laboratory mixer.
      ii. Filling the composition in a standard laboratory mixer.
      iii. Start-up of the mixer at least 90% of its maximum speed, monitoring the temperature of the mixture.
      iv. Once 80% of the average melting temperature of the mixture is reached, the mixer cooling will be opened, to maintain the temperature inside the mixer between 75% and 90% at most of the calculated average melting temperature, being desirable to maintain the operating temperature between 80% and 85% to prevent raw materials from agglomerating forming a caked mass, which would make it impossible to automatically empty the mixture.
      v. Mix for at least 8 min, to ensure that no caking of the mixture occurs.
      vi. Repeat the previous step if the mixture caking occurs by starting refrigeration in advance, for example 65% of the calculated temperature, and mixing for 8 minutes keeping the temperature below 80%.

### Composition and industrial conditions:

1. Dosage of raw materials:
   I. Based on the effective volume and load capacity of a standard industrial high-speed mixer, determination of the total weight of the complete batch of raw materials. The calculation of the total weight of raw materials constituting the batch to be manufactured will be carried out according to the volume occupied by each of the raw materials, so that the total volume occupied by all the raw materials is equal to or less than the maximum admissible by the standard industrial mixer; it is preferable to use at least 80% by volume of the operating capacity recommended by the manufacturer of the mixer, and more recommended 90%. In no case, as is logical, will the operating capacity in weight recommended by the manufacturer of the mixer be exceeded.
   II. Start-up of the high-speed mixer at a rotational speed of between 10% and 40% of its maximum speed, with a speed of between 20% and 30% being preferred.
   III. Weigh the mineral filler and discharging into the mixer.
   IV. Optionally, weigh the pigment and discharging it into the mixer.
   V. Optionally, weigh the fibre and discharging it into the mixer.
   VI. Weigh the binder additives and discharge into the mixer.
   VII. Optionally, weigh the additional additives and discharge into the mixer.
   VIII. Start of the mixing process:
      i. Increase the speed of the mixer to a speed of between 80% and 100% of its speed, with a mixing speed of between 90% and 100% being preferred.
      ii. The total mixing time will be between 5 min and 10 min, with a mixing time of between 6 min and 7 min being preferred. Extending the mixing time, due to the heat generated by the shear effect that occurs inside the mixer, can inevitably lead, despite cooling, to the caking of the mixture.
      iii. Monitoring the temperature inside the mixer during the entire mixing time.
         1. Start of cooling at 80% of the average melting temperature previously verified in the laboratory.
         2. Maintenance, through the cooling system, of the mixing temperature at 85% and 90% of the average melting temperature.
   IX. Discharge the mixture into a dosing hopper.
2. Granulation in a standard horizontal plate pelletizing machine with rotating roller.
   I. Selection of granulator plate, according to the desired pellet diameter: where the desired pellet diameter is "D", the granulating plate shall have the following characteristics (FIG. 3):
      i. Pitch diameter: D.
      ii. Straight length: L; Meeting ratio: 2.0 < UD < 3.0.
      iii. a = 0.66 · ( e - L); where: e = a + L + B.
   II. Adjustment of the pellet cutting blades, at their exit from the granulating plate, according to the desired pellet length. This step, depending on the selected composition, which determines the degree of fluidity of the mixture, will be carried out by trial and error, until the optimal distance at which to place the blades is adjusted, resulting in the desired length.
   III. Once the granulating machine has been set, it will start at its rated rotational speed.
   IV. Dosing of the mixture of the stage e) Maintaining the filling level of the pellet hopper at its optimum level:
      i. Once the melting temperature has been reached in the granulating plate, for which the granulation unit will have a continuous temperature measurement system, the cooling of the granulation process will begin using either industrial grade liquid nitrogen or carbon snow. The objective is that the temperature is maintained at the melting temperature calculated in stage b), with a preferable tolerance of ±5% of said temperature, and more preferably ±2.5%.
   V. The mixture obtained from the granulating machine will be taken to a selection unit of the desired diameter and length. Since the granulation unit obtains a percentage of production out of specifications: greater or shorter length; Even a certain percentage of non-pelletized, powdery as it was fed to the granulating machine, the production will be sieved to collect the target product. The discarded product will be returned to the granulation unit.

### Industrial manufacturing:

1. Definition of the composition in accordance with the first aspect of the invention.
   I. Selection of the mineral filler, pigment, fiber or any combination thereof to be included in the composition.
   II. Selection of binding additives and, optionally if desired, one of the additional additives in accordance with the first aspect of the invention.
2. Mathematical determination of the average melting temperature of the binder and additional additives, as a weighted average of the melting temperatures of each of the selected additives.
3. Dosage of raw materials:
   I. Based on the effective volume and load capacity of a standard high-speed mixer, determination of the total weight of the complete batch of raw materials. The calculation of the total weight of raw materials constituting the batch to be manufactured will be carried out according to the volume occupied by each of the raw materials, so that the total volume occupied by the raw materials is equal to or less than the maximum allowable by the mixer; it is preferable to use at least 80% of the operating capacity recommended by the manufacturer of the mixer, and more recommended 90%.
   II. Start-up of the high-speed mixer at a rotational speed of between 10% and 40% of its maximum speed, with a speed of between 20% and 30% being preferred.
   III. Weigh the mineral load and discharge it into the mixer.
   IV. Optional pigment weighing and discharge into the mixer.
   V. Optional fibre weighing and discharge it into the mixer.
   VI. Weigh the binder additives and discharge into the mixer.
   VII. Optionally, weigh and discharge additional additives into the mixer.
4. Start of the mixing process:
   I. Increase the speed of the mixer to a speed of between 80% and 100% of its speed, with a mixing speed of between 90% and 100% being preferred.
   II. The mixing time will be between 5 min and 10 min, with a mixing time of between 6 min and 7 min being preferred.
   III. Monitoring of the mixing temperature during the mixing process, so that the temperature inside the mixer is not more than 90% of the melting temperature of the binder additive mixture calculated in step (b), so that the raw material mixture is always a loose powdery mixture and not a sticky mass.
5. Discharge the mixture into a dosing hopper.
6. Start up the pelletizer, it is recommended to use a horizontal plate pelletizer with rotating rollers:
   I. Selection of the granulating plate, according to the desired pellet diameter.
   II. Adjustment of the pellet cutting blades, at their exit from the granulating plate, according to the desired pellet length. This step, depending on the selected composition, which determines the degree of fluidity of the mixture, will be carried out by trial and error, until the optimal distance at which to place the blades is adjusted to result in the desired length.
   III. Once the granulating machine has been set, it will start at its rated rotational speed.
   IV. Dosing of the mixture of the stage e) maintaining the filling level of the pellet hopper at its optimum level:
      i. Once the melting temperature has been reached in the granulating plate, for which the granulation unit will have a continuous temperature measurement system, the cooling of the granulation process will begin using either industrial grade liquid nitrogen or carbon snow. The objective is that the temperature is maintained at the melting temperature calculated in stage b), with a preferable tolerance of ±5% of said temperature, and more preferably ±2.5%.
   V. The mixture obtained from the granulating machine will be taken to a selection unit of the desired diameter and length. Since the granulation unit obtains a percentage of production out of specifications: greater or shorter length; even a certain percentage of non-pelletized, powdery as it was fed to the granulating machine, the production will be sieved to collect the target product. The discarded product will be returned to the granulation unit.
   VI. Shipment of the target finished product to the shipping unit (FIG. 1).

While particular embodiments of the present disclosure have been illustrated and described, it would be obvious to those skilled in the art that various other changes and modifications can be made without departing from the spirit and scope of the disclosure. It is therefore intended to cover in the appended claims all such changes and modifications that are within the scope of this disclosure.

## Claims

1. A masterbatch composition comprising:
- from 75 wt. % to 90 wt. % of mineral filler, pigment, fibre or any combination thereof, and
- from 10 wt. % to 25 wt. % of binder additives,
wherein the masterbatch composition is a plastic resin-free composition, and wherein all the weight percentages (wt. %) are relative to the total weight of the composition.

2. The masterbatch composition according to claim 1, wherein the masterbatch composition comprises from 80 wt. % to 90 wt. % of mineral filler, pigment, fibre or any combination thereof.

3. The masterbatch composition according to any previous claim, wherein the mineral filler is selected from inorganic mineral filler, organic mineral filler or any combination thereof.

4. The masterbatch composition according to any previous claim, wherein the inorganic mineral filler is selected from calcium carbonate, magnesium silicates, calcium sulphate, mica, calcium silicate, barium sulphate, kaolin or any combination thereof.

5. The masterbatch composition according to any previous claim, wherein the organic mineral filler is selected from starch, cellulose, hemicellulose, cereal flours, wood flours, tree bark flours, nut flours, hemp fibres, chicken feathers, rice hulls or any combination thereof.

6. The masterbatch composition according to any previous claim, wherein the pigment is:
- an organic pigment selected from aromatic compounds selected from the chromophore lump -N=N--, anthraquinone, phthalocyanoin, thioindaco, perylene or any combination thereof,
- an inorganic pigment selected from iron oxide, copper oxide, lead oxide, cobalt aluminate, nickel titanate, lead chromate, lead molybdate, zinc chromate, carbon black, titanium oxide or any combination thereof,
- or any combination thereof.

7. The masterbatch composition according to any one of previous claims, wherein the masterbatch composition comprises from 10 wt. % to 20 wt. % of binder additives.

8. The masterbatch composition according to any one of previous claims, wherein the binder additives are solid at room temperature and selected from fatty acids, fatty acid esters, waxes and paraffins, waxes grafted with maleic anhydride, functional aluminium acid ester compounds, titanate coupling agent, calcium stearate or any combination thereof.

9. The masterbatch composition according to claims 7 and 8, wherein the binder additive is at least one of the following and comprises:
- from 0 wt. % to 10 wt. % of fatty acid, excluded 0, wherein the fatty acid is preferably a stearic acid from 3 wt. % to 6 wt. %,
- from 0 wt. % to 10 wt. % of long-chain fatty acid ester (C14-C16) with high molecular weight alcohols (C16 to C30), excluding 0, preferably from 3 wt. % to 8 wt. %,
- from 0 wt. % to 4 wt. % of functional aluminium acid ester compounds, excluded 0, preferably from 0.5 wt. % to 1.5 wt. %,
- from 0 wt. % to 4 wt. % of waxes grafted with maleic anhydride, excluded 0, preferably from 0.5 wt. % to 1.5 wt. %,
- from 0 wt. % to 4 wt. % of titanate coupling agent, excluded 0, preferably from 0.5 wt. % to 1.5 wt. %,
- or any combination thereof, and
wherein all the weight percentages (wt. %) are relative to the total weight of the composition.

10. The masterbatch composition according to any one of previous claims 1-9, wherein the masterbatch composition further comprises additional additives of less than 15 wt. %, selected from:
- liquid additional additive at room temperature selected from oils, preferably castor oil and glycolic or any combination thereof, or/and
- additional additive selected from plasticizers, processing aids, rheological agents, antistatic agents, anti-UV agents, hardening agents, anti-fogging agents, compatibilizers, slipping agents, flame retardants, antioxidants, pro-oxidant elements, light stabilizers, oxygen scavengers, inks, adhesives and fertilizers plant protection products or any combination thereof,
- or any combination thereof, and
wherein all the weight percentages (wt. %) are relative to the total weight of the composition.

11. A method for producing a masterbatch comprising a composition according to claims 1 to 10, comprising the steps of:
a. Mixing the mineral filler, pigment, fibre or any combination thereof, with the binder additives at room temperature in a standard high-speed mixer;
b. Optionally adding the additional additives to the mixture of step (a);
c. Optionally cooling the mixture of step (a) or (b);
d. Granulating of the mixture of any one of previous steps (a) or (b) or (c) in a standard flat die pellet mill, wherein the granulating further comprises:
i. setting the pellet length from 2.50 to 6.00 mm, preferably from 3.0 mm to 5.5 mm, and more preferably from 4.50 to 5.00 mm; and
ii. shaping the settled pellet in a cylindrical pellet form with a diameter from 2.00 mm to 6.00 mm, preferably from 2.50 mm to 4.00 mm, even more preferably from 2.75 mm to 3.50 mm; and producing a masterbatch.

12. Plastic article **characterised in that** it comprises:
- a masterbatch composition according to any one of claims 1 to 10, and
- a thermoplastic polymer resin selected from polyolefin, polyethylene (PE), polypropylene (PP), polymethylpentene (PMP), polybutene-I (PB-1), polyisobutylene (PIB), ethylene propylene rubber (EPR), ethylene propylene diene monomer rubber (EPDM), cyclic olefin copolymer (COC) and derivatives or any combination thereof.

13. Plastic article according to claim 12, wherein the plastic article comprises from 2 wt. % to 80 wt. % of the masterbatch composition by weight relative to the final weight of the plastic article.

14. A method for producing a plastic article according to claims 11 and 12, comprising the steps of:
a. Providing a masterbatch comprising a composition according to claim 1-10; and
b. Mixing the masterbatch composition of previous step (a) into a thermoplastic polymer resin, and
wherein the thermoplastic polymer resin is selected from polyolefin, polyethylene (PE), polypropylene (PP), polymethylpentene (PMP), polybutene-I (PB-1), polyisobutylene (PIB), ethylene propylene rubber (EPR), ethylene propylene diene monomer rubber (EPDM), cyclic olefin copolymer (COC) and derivatives or combinations thereof.

15. Use of a masterbatch composition according to claims 1 to 10 for producing plastic articles.
